Europäisches Patentamt

European Patent Office

Office européen des brevets

(11) Numéro de publication: **0 279 262**
**B1**

(12) **FASCICULE DE BREVET EUROPEEN**

(45) Date de publication du fascicule du brevet:
**01.08.90**

(21) Numéro de dépôt: **88101380.9**

(22) Date de dépôt: **01.02.88**

(51) Int. Cl.⁵: **A47J 37/12**

(54) Friteuse ménagère.

(30) Priorité: **09.02.87 FR 8701554**

(43) Date de publication de la demande:
**24.08.88 Bulletin 88/34**

(45) Mention de la délivrance du brevet:
**01.08.90 Bulletin 90/31**

(84) Etats contractants désignés:
**AT BE CH DE ES GB GR IT LI NL SE**

(56) Documents cités:
**DE-A- 3 221 433**
**GB-A- 2 098 753**
**US-A- 2 108 627**
**US-A- 2 532 894**
**US-A- 2 546 464**
**US-A- 2 903 958**
**US-A- 3 501 316**
**US-A- 3 911 249**

(73) Titulaire: **MOULINEX, 7 à 15, rue Jules-Ferry,
F-93171 Bagnolet Cédex(FR)**

(72) Inventeur: **Jacob, Robert, Société MOULINEX 2, rue de
l'Industrie, Cormelles-Le-Royal F-14123 IFS(FR)**

(74) Mandataire: **May, Hans Ulrich, Dr., Patentanwalt Dr. H.U.
May Thierschstrasse 27, D-8000 München 22(DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention se rapporte aux friteuses ménagères du type de celle définie dans le préambule de la revendication 1. Un dispositif de cuisson présentant les caractéristiques définies dans le préambule de la revendication 1 est connu du US-A2 532 894, cependant un tel dispositif de cuisson est à usage industriel uniquement.

L'invention concerne, plus précisément, les friteuses ménagères dans lesquelles le panier est monté mobile grâce à des moyens électromagnétiques de descente et remontée dont l'alimentation électrique est subordonnée à un dispositif de commande.

Dans les friteuses connues de ce genre, lorsque l'usager veut, par exemple, utiliser la friteuse alors que le panier est en position abaissée et que la bassine contient, depuis sa dernière mise en service, de la graisse solidifiée qui emprisonne ce panier et le solidarise avec la paroi de la bassine, il peut arriver, par inadvertance, que l'on agisse sur le dispositif de commande avant la fusion presque totale de la graisse. Si cette manoeuvre est effectuée, on risque d'endommager ou de détruire les moyens électromécaniques de descente et remontée du panier.

L'invention a notamment pour but d'éliminer ce risque. A cet effet, l'invention prévoit les mesures définies par les caractéristiques contenues dans la partie caractérisante de la revendication 1.

Grâce à ces mesures et notamment à l'utilisation d'un commutateur sélecteur, l'usager évite la destruction des moyens électromécaniques lorsque la bassine contient un bloc de graisse. En outre, lorsque la bassine contient de l'huile, l'usager court-circuite l'interrupteur de sécurité et peut commander les moyens électromécaniques sans attendre la fermeture de cet interrupteur de sécurité. En outre, du fait que la commande des moyens électromécaniques n'est pas subordonnée au fonctionnement du thermostat de régulation, l'usager peut immédiatement amener le panier en sa position élevée pour le charger et laisser ensuite la commande automatique de la friteuse se charger des opérations de cuisson. Ce gain de temps n'est pas négligeable et apporte un progrès dans les friteuses à usage domestique.

Les caractéristiques et avantages de l'invention ressortiront d'ailleurs de la description qui va suivre, à titre d'exemple, en référence aux dessins annexés dans lesquels ;

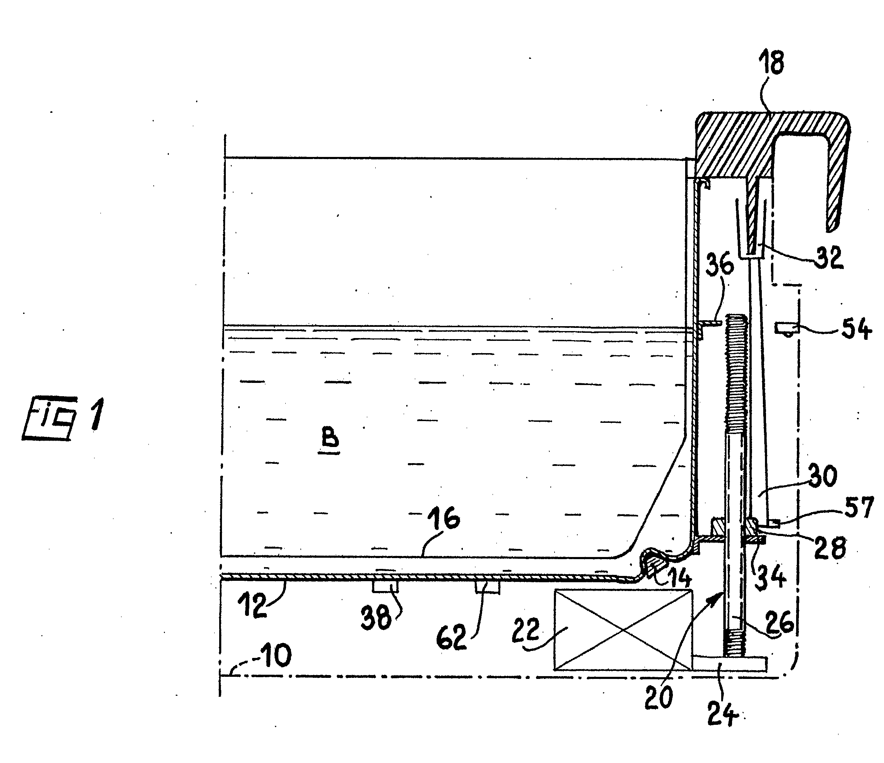

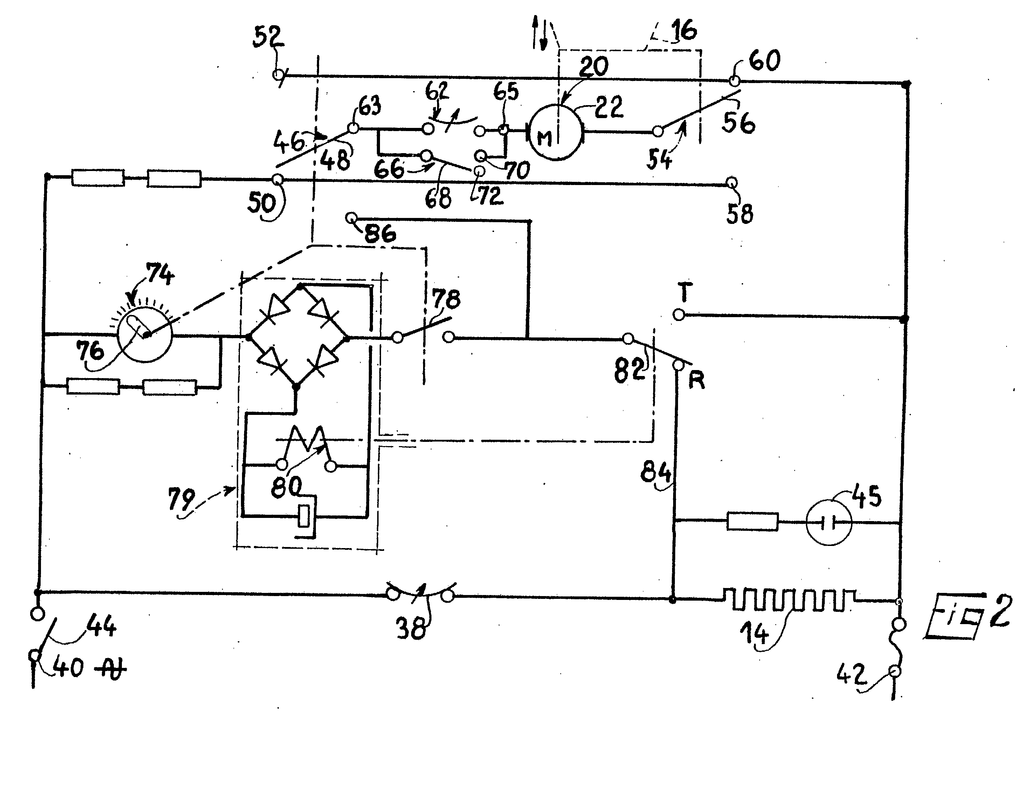

la figure 1 est une vue schématique, en coupe verticale partielle, d'une friteuse comportant des moyens électromécaniques de manoeuvre du panier et susceptible de recevoir un dispositif de commande selon l'invention ;la figure 2 est un schéma électrique du dispositif de commande selon l'invention, ainsi que des circuits d'alimentation de la résistance chauffante et des moyens électromécaniques de descente et remontée du panier.

La friteuse représentée comprend, dans un boîtier 10, une bassine 12 contenant un bain de cuisson B constitué soit par de l'huile, soit par de la graisse provenant de la fusion d'un bloc de graisse, une résistance chauffante électrique 14 fixée sur le fond de la bassine 12 et adaptée à chauffer le bain de cuisson, un panier perforé 16 de réception des aliments à frire qui est muni d'une poignée 18, et qui est monté mobile dans la bassine entre deux positions, soit une position abaissée (fig. 1) pour laquelle ce panier est plongé dans le bain de cuisson, soit une position élevée pour laquelle ce panier est maintenu au-dessus du bain de cuisson. Le passage du panier entre ces deux positions s'effectue grâce à des moyens électromécaniques 20 de descente et remontée qui sont agencés dans le boîtier 10 et qui comprennent un moteur synchrone 22 équipé d'un réducteur 24 dont l'arbre de sortie entraîne en rotation une vis 26 disposée verticalement entre les parois latérales de la bassine et du boîtier, ainsi qu'un écrou 28 qui est en prise avec le filetage de la vis 26 et qui est solidaire d'un support 30 dans lequel est ménagé un logement 32 de réception de la poignée 18 du panier. L'écrou 28 est monté mobile entre deux butées 34 et 36 qui, d'une part, déterminent respectivement les positions abaissée et élevée du panier, et d'autre part, permettent l'inversion automatique du sens de rotation du moteur synchrone 22 et donc de la vis 26 en bloquant le déplacement de l'écrou 28 et donc la rotation de la vis dans un certain sens et provoquant ainsi l'arrêt puis la mise en oscillation du rotor du moteur synchrone 22 jusqu'à ce que ce rotor démarre dans le sens opposé. On peut en outre envisager que le panier déclenche une sonnerie (non représentée) destinée à prévenir l'usager, lorsqu'il atteint sa positon élevée.

En se rapportant au schéma électrique représenté sur la figure 2, on voit que la résistance chauffante 14 est branchée en série avec un interrupteur thermostatique de régulation 38 (dit ci-après thermostat) de la température du bain de cuisson qui est appliqué, par exemple, sur le fond de la bassine 12 et dont la température de fonctionnement est comprise entre 140°C et 190°C ; cet ensemble résistance et thermostat étant branché entre les bornes 40 et 42 du réseau d'alimentation par l'intermédiaire d'un interrupteur général 44. Un voyant de contrôle 45 est monté en parallèle aux bornes de la résistance 14.

Le dispositif de commande de l'alimentation électrique des moyens électromécaniquesde descente et remontée du panier comprend, un commutateur 46 comportant, d'une part, une armature mobile 48 reliée au moteur 22,et d'autre part, au moins deux plots 50 et 52 reliés respectivement à une borne de l'interrupteur général 44 et à la borne 42 du réseau, ainsi qu'un commutateur de fin de course 54 qui comporte, d'une part, une armature mobile 56 reliée à une borne du moteur 22, et, d'autre part, deux plots 58 et 60 reliés respectivement à la borne 50 et à la borne 42 et dont l'armature 56 est manoeuvrée par un doigt 57 du support mobile 30, dès que le panier atteint soit sa position abaisée, soit sa position élevée.

Selon l'invention, le dispositif de commande comprend, en outre, un interrupteur de sécurité 62 qui est monté en série dans le circuit d'alimentation du moteur 22 par ses bornes 63 et 65 reliées respectivement à l'armature 48 et audit moteur 22, et dont le fonctionnement est commandé par un détecteur; cet interrupteur et ce détecteur étant constitué par un interrupteur thermostatique. Cet interrupteur thermostatique 62 est agencé sur la paroi de la bassine 12 et est apte à capter un état déterminé du bain de cuisson, à savoir : la température du bain correspondant à la fusion presque totale d'un bloc de graisse, et cet interrupteur peut occuper, soit un état de conduction pour lequel il ferme le circuit d'alimentation du moteur 22 et autorise la remontée ou la descente du panier 16, et en laquelle il est amené dès que la température dudit bain atteint une valeur de consigne fixée aux environs de cent degrès celsius (100°C), soit un état de non-conduction pour laquel il n'autorise ni la remontée, ni la descente du panier.

Le dispositif de commande comprend, de plus, un commutateur sélecteur 66 qui est monté en parallèle aux bornes 63 et 65 de l'interrupteur de sécurité 62 et dont l'armature mobile 68 peut occuper, soit une position "huile" pour laquelle elle vient en contact avec un plot 70 relié à la borne 65 et court-circuite l'interrupteur 62, soit une position "graisse" pour laquelle elle vient sur un plot mort 72 laissant ainsi l'interrupteur de sécurité accomplir sa fonction de commande du circuit d'alimentation des moyens électromécaniques de descente et remontée du panier 16.

Ainsi, la friteuse selon l'invention permet de réaliser en toute sécurité des fritures de type divers.

Le dispositif de commande comprend en outre, une minuterie 74 à moteur électrique qui est programmable par l'usager au moyen d'un bouton rotatif d'armement 76 pour déterminer notamment la durée de plongée du panier dans la bain de cuisson, et qui est susceptible d'être branchée, par un contacteur 78 solidaire dudit bouton 76, en parallèe aux bornes 40 et 42 du réseau d'alimentation. Cette minuterie comportant, de manière connue en soi, une série de cames (non représentées sur les dessins) destinées à manoeuvrer ledit contacteur 78 et le commutateur 46(les liaisons mécaniques sont schématisées sur la figure 2 par des traits interrompus) ; l'armature 48 du commutateur 46 pouvant être manoeuvré, dès le début de la course du bouton 76, pour l'amener du plot 52 au plot 50, afin d'autoriser la remontée du panier.

Dans le but de rendrele fonctionnement de la friteuse pratiquement automatique, l'invention prévoit que le dispositif de commande comporte également un circuit de déclenchement 79 du compte à rebours de la minuterie 74 qui est commandé, au moins dans un premier temps, par le thermostat 38 lorsque ledit interrupteur passe de sa position de fermeture à sa première position d'ouverture dans son cycle de régulation (la température d'ouverture du thermostat est alors aux environs de 140° C).

A cet effet, le circuit de déclenchement 79 comporte un relais 80 qui est monté en série dans le circuit d'alimentation de la minuterie 74 et dont le contact mobile 82 peut occuper: soit une position de repos (plot R), pour laquelle la minuterie et le relais sont branchés, par une liaison intermédiaire 84 connectée entre le thermostat 38 et la résistance chauffante 14, en parallèle aux borne dudit thermostat 38 et en série avec ladite résistance 14, de sorte que la minuterie et le relais sont court-circuités par le thermostat 38, et de fait, le compte à rebours de la minuterie n'est pas enclenché, et en laquelle il est maintenu tant que ledit thermostat 38 est en position de fermeture; soit une position de travail (plot T), en laquelle il est amené après un certain retard , dès que ledit ther mostat 38 passe en sa première position d'ouverture rompant le court-circuit et autorisant alors l'alimentation du relais 80 aux bornes 40 et 42 du réseau par l'intermédiaire de la minuterie 74 et de la résistance 14, et pour laquelle, la minuterie et le relais sont branchés directement en parallèle aux dites bornes 40 et 42, ce qui autorise l'activation de la minuterie et donc le compte à rebours de cette minuterie.

Dans un but de clarté, on va récapituler et préciser ci-après le déroulement d'un cycle de cuisson de la friteuse, tel qu'il se produit lorsque l'usager souhaite choisir un mode de fonctionnement pratiquement automatiques avec un bain de cuisson constitué de graisse. On considérera le panier 16, en position abaissée, et donc l'armature 56 du commutateur de fin de course 54 au contact du plot 60, l'armature 68 du commutateur sélecteur 66 en position "graisse", l'interrupteur thermostatique 62 en état de non-conduction et l'armature 48 du commutateur 46 au contact du plot 50.

Pour mettre en marche la friteuse, l'usager ferme 1'interrupteur général 44 qui met sous tension la résistance chauffante 14 puisque le thermostat 38 est en sa position de fermeture, puis il manoeuvre le bouton 76 de la minuterie pour afficher un temps de cuisson. Cette dernière manoeuvre provoque, d'une part, le passage de l'armature 48 du plot 50 sur un troisième plot 86 relié électriquement au contact mobile 82 du relais 80, et, d'autre part, la fermeture du contacteur 78. Tant que le thermostat 38 reste en position de fermeture, la résistance 14 est alimentée et, en revanche, le circuit de déclenchement 79 du compte à rebours de la minuterie 74 n'est pas activé.

Après un laps de temps relativement court et avant que le thermostat 38 ne s'ouvre (140°C), l'interrupteur thermostatique de sécurité 62 détecte la valeur de consigne fixée pour la fusion du bain de graisse (100°C) et ferme le circuit d'alimentation du moteur 22 provoquant la remontée du panier 16. En effet, le moteur 22 est branché, d'une part, à la borne 40, par le thermostat 38, la liaison intermédiaire 84, le contact 82 en position de repos, l'armature 48 placée sur le plot 86, l'interrupteur de sécurité 62 et, d'autre part, à la borne 42, par l'armature 56 du commutateur 54 placée sur le plot 60.

Dès que le panier arrive en sa position élevée, le doigt 57 du support 30 fait basculer l'armature 56 du plot 60 sur le plot 58 provoquant la coupure du circuit d'alimentation du moteur 22 et donc le maintien du panier 16 en sa position élevée, en laquelle l'usager peut le charger d'aliments à frire .

Dès cet instant, si le thermostat 38 passe en position d'ouverture, le circuit de déclenchement 79 du compte à rebours de la minuterie 74 est déclenché. En effet, le relais 80 est branché, dans un premier temps, aux bornes 40 et 42 du réseau à travers la minuterie, le contacteur 78, le contact 82 placé en position de repos et la résistance 14, puis, dans un second temps, directement aux bornes 40 et 42 par son contact 82 placé en position de travail, d'où il s'ensuit une autoalimentation de ce relais. Simultanément, le plot 86 est relié à la borne 42 et le circuit d'alimentation du moteur 22 est fermé par le commutateur 54 dont l'armature 56 est en contact avec le plot 58 relié lui-même à la borne 40 du réseau : le panier 16 descend alors jusqu'en sa position abaissée. en laquelle, au moyen du doigt 57, il fait basculer l'armature 56 sur le plot 60, ce qui provoque, à nouveau l'ouverture du circuit d'alimentation du moteur 22. Ainsi la plongée du pannier 16 dans le bain de cuisson s'effectue automatiquement à une température considérée comme idéale pour une bonne friteuse. Pendant cette phase de cuisson, le thermostat 38 joue son rôle d'organe de régulation, et n'influence pas le compte à rebours de la minuterie.

A la fin du compte à rebours de la durée choisie pour la phase de cuisson, la minuterie 74 commande, par son couplage mécanique, l'ouverture du contacteur 78 et la commutation de l'armature 48 du plot 86 sur le plot 50, ce qui provoque, d'une part, la coupure du circuit de déclenchement 79 et, d'autre part, l'alimentation du moteur 22 et donc la remontée du panier 16 jusqu'en sa position élevée. Ainsi le dispositif de commande des moyens électromécaniques est prêt à remplir sa fonction pour une autre phase de cuisson.

On comprendra aussi que si l'usager utilise de l'huile à la place de graisse, il doit, tout d'abord, placer le commutateur sélecteur 66 en position "huile", puis, dans le but d'accélérer le chargement du panier, il manoéuvre le bouton 76 de la minuterie, ce qui provoque, dès le début de sa course, l'actionnement du commutateur 46 et donc le passage de l'armature 48 du plot 52 sur le plot 50 : l'alimentation du moteur 22 est donc assurée et le panier 16 remonte jusqu'à sa position élevée. Si l'usager veut commander manuellement la descente du panier 16, il ramène la bouton 76 en sens contraire de la manoeuvre précédente, ce qui entraîne l'armature 48 du plot 50 sur le plot 52.

## Revendications

1. Friteuse ménagère comportant, dans un boîtier (10), une bassine (12) contenant un bain de cuisson constitué soit par de l'huile, soit par de la graisse provenant de la fusion d'un bloc de graisse, une résistance chauffante électrique (14) adaptée à chauffer le bain de cuisson, un interrupteur thermostatique de régulation (38) monté en série avec la résistance chauffante 14, ainsi qu'un panier (16) de réception des aliments à frire monté mobile dans la bassine et susceptible d'occuper, grâce à des moyens électromécaniques (20) de descente et remontée du panier dont l'alimentation électrique est subordonnée à un dispositif de commande, soit une position abaissée pour laquelle ce panier est plongé dans le bain, soit une position élevée pour laquelle ce panier est maintenu au-dessus du bain; le dispositif de commande comprenant un interrupteur de sécurité (62) qui est monté en série dans le circuit d'alimentation des moyens électromécaniques (20) et dont le fonctionnement est commandé par un détecteur apte à capter un état déterminé du bain de cuisson en ce que l'état déterminé du bain de cuisson que le détecteur est apte à détecter correspond à la fusion presque totale d'un bloc de graisse de sorte que ledit interrupteur (62) peut occuper, soit un état de conduction pour lequel il ferme ledit circuit d'alimentation et autorise la mise en œuvre des moyens électromécaniques (20) par le dispositif de commande et en laquelle il est amené dès que le détecteur capte ledit état déterminé du bain de cuisson, soit un état de non-conduction pour lequel il ouvre le circuit d'alimentation et empêche ainsi la mise en œuvre des moyens électromécaniques (20) par ledit dispositif de commande, caractérisée en ce que l'état déterminé du bain de cuisson que le détecteur est apte à détecter correspond à la fusion presque totale d'un bloc de graisse et en ce que le dispositif de commande comprend en outre un commutateur sélecteur (66) à commande manuelle qui est monté en parallèle aux bornes (63 et 65) de l'interrupteur de sécurité (62) et dont l'armature mobile (68) peut occuper, soit une position "huile" pour laquelle ledit interrupteur (62) est court-circuité, soit une position "graisse" pour laquelle cet interrupteur (62) accomplit sa fonction de sécurtié électrique dans le circuit d'alimentation des moyens électromécaniques (20) de descente et remontée du panier.

2. Friteuse ménagère selon la revendication 1, caractérisée en ce que le détecteur et l'interrupteur étant constituées par un interrupteur thermostatique (62) qui est agencé sur la paroi de la bassine pour prélever la température du bain de cuisson, ledit interrupteur (62) est amené en son état de conduction dès que la température dudit bain atteint une valeur de consigne fixée aux environs de cent degrès celsius (100°C).

3. Friteuse ménagère selon la revendication 1 ou la revendication 2, caractérisée en ce que, le dispositif de commande comportant, en outre, une minuterie motorisée (74) programmable par un bouton d'armement (76) pour déterminer notamment la durée de plongée du panier (16) pour déterminer notamment la durée de plongée du panier (16) dans le bain en position abaissée, ainsi qu'un circuit de déclenchement (79) du compte à rebours de ladite minuterie (74) qui est commandé, au moins dans un premier temps, par l'interrupteur thermostatique de régulation (38) lorsque cet interrupteur passe en sa première position d'ouverture de son cycle de régulation, ledit circuit de déclenchement (79) comporte un relais (80) qui est monté en série dans le circuit d'alimentation de la minuterie (74) et dont le contact mobile 82 peut occuper: soit une position de repos, pour laquelle la minuterie (74) et le ralais (80) sont branchés en parallèle aux bornes de l'interrupteur thermostatique de régulation (38) et en série avec la résistance chauffante (14) de sorte que la minuterie et le ralais (80) sont court-circuités et donc non activés, et en laquelle il est maintenu tant que ledit interrupteur de régulation (38) est en position de fermeture; soit une position de travail, en laquelle il est amené dès que l'interrupteur de régulation (38) passe en sa première position d'ouverture, rompant ainsi le court-circuit et autorisant alors l'alimentation du relais (80) aux bornes (40 et 42) du réseau par l'intermédiaire de la minuterie (74) et de la résistance chauffante (14), et pour laquelle, après un certain retard, la minuterie (74) et le ralais (80) sont branchés directement en parallèle aux borne du réseau (40 et 42), ce qui autorise l'activation et le compte à rebours de ladite minuterie (74).

## Patentansprüche

1. Haushalts-Friteuse, die in einem Gehäuse (10) aufweist: eine Wanne (12), welche das entweder aus Öl oder aus dem vom Schmelzen eines Fettblocks stammenden Fett bestehende Fritierbad enthält, einen elektrischen Heizwiderstand (14), der zum Heizen des Fritierbades eingerichtet ist, einen in Reihe mit dem Heizwiderstand (14) liegenden thermostatischen Regelschalter (38), sowie einen zur Aufnahme von zu fritierenden Lebensmitteln dienenden Korb (16), der in der Wanne beweglich gehalten ist und dank einer elektromechanischen Vorrichtung (20) zum Absenken und Wiederanheben des Korbes, die einer Steuervorrichtung untergeordnet ist, entweder eine abgesenkte Stellung, in welcher dieser Korb in das Bad eintaucht, oder eine angehobene Stellung, in welcher dieser Korb oberhalb des Bades gehalten ist, einnehmen kann; wobei die Steuervorrichtung einen Sicherheitsschalter (62) aufweist, der in Reihe im Stromkreis der elektromechanischen Vorrichtung (20) liegt und dessen Funktion durch einen Detektor gesteuert ist, der einen bestimmten Zustand des Fritierbades erfassen kann, wobei der Sicherheitsschalter (62) entweder einen leitenden Zustand, in welcher er den Stromkreis schließt und die Betätigung der elektromechanischen Vorrichtung (20) durch die Steuervorrichtung zuläßt, und in welchen er gebracht wird, sobald der Detektor den bestimmten Zustand des Fritierbades feststellt, oder einen nichtleitenden Zustand einnehmen kann, in welchem er den Stromkreis öffnet und so die Einschaltung der elektromechanischen Vorrichtung (20) durch die Steuervorrichtung verhindert, dadurch gekennzeichnet, daß der bestimmte Zustand des Fritierbades, den der Detektor erfassen kann, dem fast vollständigen Schmelzen eines Fettblocks entspricht, und daß die Steuervorrichtung außerdem einen handbetätigten Wählschalter (66) aufweist, der parallel zu den Klemmen (63 und 65) des Sicherheitsschalters (62) geschaltet ist und dessen bewegliches Schaltglied (68) entweder eine Stellung "Öl", in welcher der Sicherheitsschalter (62) kurzgeschlossen ist, oder eine Stellung "Fett" einnehmen kann, in welcher dieser Sicherheitsschalter (62) seine elektrische Sicherheitsfunktion im Stromkreis der elektrischen Vorrichtung (20) zum Absenken und Wiederanheben des Korbes erfüllt.

2. Haushalts-Friteuse nach Anspruch 1, dadurch gekennzeichnet, daß der Detektor und der Schalter aus einem thermostatischen Schalter (62) bestehen, der an der Wand der Wanne angebracht ist, um die Temperatur des Fritierbades festzustellen, wobei der Schalter (62) in seinen leitenden Zustand gebracht wird, sobald die Temperatur des Bades einen auf etwa hundert Grad Celsius (100°C) festgelegten Sollwert erreicht.

3. Haushalts-Friteuse nach Anspruch 1 oder Anspruch 2, dadurch gekennzeichnet, daß, wenn die Steuervorrichtung außerdem einen durch einen Stellknopf (76) programmierbaren motorisch angetriebenen Zeitschalter (74) zur Bestimmung insbesondere der Eintauchdauer des in dem Bad in die abgesenkte Stellung gebrachten Korbes (16) sowie einen Auslösekreis (79) des Startzählers des Zeitschalters (74), der mindestens zu einem ersten Zeitpunkt durch den thermostatischen Regelschalter (38) gesteuert ist, wenn dieser Schalter in seine erste Öffnungsstellung seines Regelzyklus gelangt, aufweist, der Auslösekreis (79) ein Relais (80) enthält, das in Reihe in den Stromkreis des Zeitschalters (74) gelegt ist und dessen beweglicher Kontakt (82) folgende Stellungen einnehmen kann: entweder eine Ruhestellung, in welcher der Zeitschalter (74) und das Relais (80) parallel zu den Klemmen des thermostatischen Regelschalters (38) und in Reihe mit dem Heizwiderstand (14) so gelegt sind, daß der Zeitschalter und das Relais (80) kurzgeschlossen und daher nicht aktiviert sind, und in welcher Stellung er gehalten ist, solange der Regelschalter (38) sich in der Schließstellung befindet; oder eine Arbeitsstellung einnehmen kann, in welche er gebracht wird, sobald der Regelschalter (38) in seine erste Öffnungsstellung gelangt, wobei er den Kurzschluß aufhebt und so die Stromversorgung des Relais (80) an den Klemmen (40 und 42) des Netzes über den Zeitschalter (54) und den Heizwiderstand (14) zuläßt und in welcher mit einer gewissen Verzögerung der Zeitschalter (74) und das Relais (80) direkt parallel an die Anschlußklemmen (40 und 42) des Netzes angeschlossen sind, was die Aktivierung und die Startzählung des Zeitschalters (74) ermöglicht.

## Claims

1. A domestic frying device comprising, in a casing (10), a bowl (12) containing a cooking bath constituted either by oil or by fat derived from melting a block of fat, an electric heating resistor (14) adapted to heat the cooking bath, a thermostatic control switch (38) mounted in series with the heating resistor (14) and a basket (16) to hold the foods to be fried which is movably mounted in the basket and can occupy, thanks to electromechanical means (20) for lowering and raising the basket, the supply of electricity to which is under the control of a control device, either a lowered position in which the basket is immersed in the bath or a raised position in which the basket is held above the bath; the control device comprises a safety switch (62) which is mounted in series in the supply circuit of the electromechanical means (20) and the operation of which is controlled by a sensor adapted to detect a pre-determined state of the cooking bath in such a way that the said switch (62) may occupy either a conducting state in which it closes the said supply circuit and permits the actuation of the electromechanical means (20) by the control device, and into which it is brought after the sensor detects the said pre-determined state, or a non-conducting state in which it opens the supply circuit and thus prevents the actuation of the electromechanical means (20) by the said control device, characterized in that the pre-determined state of the cooking bath which the sensor is adapted to detect corresponds to the almost complete melting of a block of fat and in that the control device also comprises a manually controlled selector switch (66) which is mounted in parallel to the terminals (63 and 65) of the safety switch (62) and the movable armature (68) of which may occupy either an "oil" position, in which the said switch (62) is short-circuited, or a "fat" position in which this switch (62) performs its function as an electrical safety switch in the supply circuit of the electromechanical means (20) for raising and lowering the basket.

2. A domestic frying device as described in Claim 1, characterized in that the sensor and switch are constituted by a thermostatic control switch (62) which is disposed on the wall of the basket to measure the temperature of the cooking bath, and the said switch (62) is brought into its conducting state as soon as the temperature of the said bath reaches a set value fixed at about one hundred degrees Celsius (100°C).

3. A domestic frying device as described in Claim 1 or Claim 2, characterized in that the control device also comprises a motor-driven timer (74), which can be programmed by a setting button (76) to determined in particular the period for which the basket (16) is immersed in the bath in its lowered position, and also a circuit (79) for actuating the coutdown of the said motor-driven timer (74) which is controlled, at least during a first period, by the thermostatic control switch (38) when this switch moved into its first position of its control cycle, the said actuation circuit (79) comprises a relay (80) which is mounted in series in the supply circuit of the timer (74) and the movable contact (82) of which may occupy either a resting position, in which the timer (74) and the relay (80) are connected in parallel to the terminals of the thermostatic control switch (38) and in series with the heating resistor (14) in such a way that the timer and the relay (80) are short-circuited and thus not activated, and in which it is held as long as the said control switch (38) is in the closed position, or in an operating position into which it is brought as soon as the control switch (38) passes into its first opening position, thus opening the short-circuit and thus permitting electricity to be supplied to the relay (80) from the network supply terminals (40 and 42) through the intermediary of the timer (74) and the heating resistor (14) and in which, after a pre-determined delay, the timer (74) and the relay (80) are directly connected in parallel to the supply terminals (40 and 42) thus enabling activation and countdown of the said timer (74).

Fig 1

EP 0 279 262 B1

Fig 2